# EUROPEAN PATENT SPECIFICATION

(11) **EP 3 286 505 B1**
(45) Date of publication and mention of the grant of the patent: **12.06.2019**
(21) Application number: 16728094.0
(22) Date of filing: 21.04.2016
(51) Int. Cl.: F24S 80/20, F24S 23/70, F24S 23/79, F24S 20/20, F24S 70/10

(54) **DEVICE FOR COLLECTING SOLAR ENERGY BY MEANS OF A CONCENTRATOR OF THE NONIMAGING TYPE**
VORRICHTUNG ZUM SAMMELN VON SOLARENERGIE MIT EINEM NICHTABBILDENDEN KONZENTRATOR
DISPOSITIF SERVANT À COLLECTER DE L'ÉNERGIE SOLAIRE AU MOYEN D'UN CONCENTRATEUR DU TYPE NON IMAGEANTE

(30) Priority: 21.04.2015 IT UB20150365
(43) Date of publication of application: 28.02.2018
(73) Proprietor: EZ-Energies GmbH, 86150 Augsburg (DE); King Abdulaziz City for Science and Technology, Riyadh 11442 (SA)
(72) Inventor: DE RICCARDIS, Andrea, 73100 Lecce (IT); KOCH, Tobias, 86150 Augsburg (DE); AL-YOUSEF, Yousef M., Riyadh 11442 (SA)
(74) Representative: Feltrinelli, Secondo Andrea
(86) International application number: PCT/IB2016/052255
(87) International publication number: WO 2016/170485

(56) References cited:
- WO-A1-2012/120016
- WO-A1-2014/038553
- WO-A2-2011/027309
- US-B1- 8 109 265

## Description

The present invention concerns a device for collecting solar energy by means of a concentrator of the nonimaging type.

The invention is referred to the field of devices for collecting solar energy of the nonimaging type (NIO), such as CPC (Coumpond Parabolic Concentrator), and in particular to a new way of operating and using the same.

It is known that the solar radiation reaching the surface of the Earth has mean values of thermal flux around 1 kWh/m²: sucha value is too low and economically non convenient to be exploited in pants of production of electric energy.

As a consequence, starting from the need to concentrate high density fluxes over small surfaces, developed the first studies on the concentration optical systems and, in particular, those dedicated to nonimaging optics (NIO). In fact, such concentration devices have the advantage of optimising the transmission of energy from a source to a receiver, instead of forming the typical image of the optic systems (IO) and with no relevance in the field of energy transfer.

The CPC (Compound Parabolic Concentrator), evolution of the cone concentrator, belongs to the class of nonimaging concentrators: reaching concentration values very closet o those of the ideal concentrator, and is able to concentrate and transfer towards its outlet section almost the entire energy of the beams of rays tapping on the opening, with an angle that is lower or the same of the acceptance angle θ for which the concentrator was designed.

The receiver, device designed to absorb the sun radiation, is represented generally as a separate unit and, in its various forms and embodiments, if positioned at the level of the ground, is generally covered exactly by a nonimaging concentrator (very frequently a CPC) having the task of increasing the density of concentration. The receiver does not have any interaction with the concentration system, without modifying, in any way, its operation.

WO2014/038553 discloses a device for collecting solar energy by means of a concentrator of the nonimaging type, wherein inside the receiver is originated a fluidised bed of solid particles. Solid particles are heated by means of exposure to concentrated sun radiation and subsequently withdrawn and sent to a heat exchanger. The fluidisation gas is withdrawn separately from the solid particles and sent to a heat exchanger for pre-heating of the same gas fed to the fluidised bed.

In actual situations, nonimaging systems behave differently with respect to the ideal situation. In fact, according to experimental tests, a part of rays with an incidence angle that is very close to the acceptance angle θ have an inverse behavior compared to that expected and generate transmission curves with inflection points more or less accentuated.

Moreover, all the beams of rays with angle higher than the acceptance angle θ are rejected and pass through the inlet section abandoning the CPC.

The conveying of the solar rays in the NIO optics within the limits of the acceptance angle results in the need for extremely expensive pointing systems of sun radiation, with a consequent increase in costs of the system.

There is therefore the need to improve the behavior of NIO systems with respect to the transmission of sun radiation on to the receiver, when the beams of rays arrive with an angle higher or close to the acceptance angle.

In this context it is included the solution according to the present invention, which aims to provide a new method and system to optimize energy harvesting in a NIO system.

These and other results are obtained according to the present invention by proposing to enter inside the volume delimited by the NIO system, such as a CPC, in the opposite direction to that of concentration, a fair number of solid particles, so that the latter can intercept and absorb up to thermodynamic equilibrium and during the multiple and random locations occupied in the fall or ascent phase, the sun radiation that enters the CPC.

A purpose of the present invention is therefore to provide a device for collecting solar energy by means of a concentrator of the nonimaging (NIO) type suitably coupled with a receiver, which allows to overcome the limitations of NIO systems according to the prior art and to obtain the previously described technical results.

A further aim of the invention is that said device for collecting solar energy by means of a concentrator of the nonimaging type can be made with low costs, with regard to both the production costs and the management costs.

Another object of the invention is to propose a device for collecting solar energy by means of a concentrator of the nonimaging type that is simple, safe and reliable.

It is therefore a specific object of the present invention a device for collecting solar energy by means of a concentrator of the nonimaging type and a receiver for the transfer of energy by heat exchange with a fluid which operates, independently, a thermodynamic cycle for the exploitation of energy, said concentrator comprising an inlet area, an underlying outlet area and an inner space between said inlet area and said outlet area; said receiver being positioned under said concentrator and said inner space of the concentrator and said receiver being connected by said outlet area, wherein said inner space of the concentrator and said receiver are in fluid communication through said outlet area, a plurality of solid particles are present inside said receiver, and said device for collecting solar energy comprises means apt to take a part of said solid particles from said receiver and to put them from below inside said inner space of said concentrator, said solid particles subsequently returning, by gravity, into said receiver, passing through said outlet area.

In particular, according to the invention, said means apt to take said solid particles from said receiver and to put them from below inside said inner space of said concentrator comprise an input device.

Preferably, according to the invention, said means apt to take said solid particles from said receiver and to put them from below inside said inner space of said concentrator are made of streams of gases, vapours, or by a combination of the same, apt to raise said solid particles up to a height comprised between said inlet area and said outlet area of the concentrator.

More preferably, according to the invention, said receiver and said means apt to take said solid particles from said receiver and to put them from below inside said inner space of said concentrator are made of a spouted bed.

In particular, according to the present invention, said concentrator is a CPC concentrator (Compound Parabolic Concentrator).

Finally, always according to the invention, said solid particles are made of a material with high solar absorption and low emissivity, such as metal-type oxides and, preferably, chromite ((Mg,Fe)(Cr,Al)₂O₄).

It is evident the effectiveness of the device of the present invention, which allows to intercept and absorb, by means of the solid particles placed inside the volume delimited by the nonimaging system, the sun radiation which enters in the same. By modifying the amount, the height and the frequency of the jet of particles, it is possible to do so that the particles can reach the receiver progressively increasing their temperature, up to a level such as to make efficient the heat exchange with another fluid which operates, independently, a thermodynamic cycle for the exploitation of energy.

Since, statically, the particles can be in some positions occupied by beams of rays that, after a series of internal reflections in the nonimaging system, would be thrown to the outside, it is clear that the new device is able to modify the energy performance of a traditional CPC concentrator or, more generally, of any nonimaging concentrator.

The present invention will be now described, for illustrative but not limitative purposes, according to its preferred embodiment, with particular reference to the figuress of the accompanying drawings, in which:
- figure 1 shows a sectional view of a CPC concentrator according to the prior art, and
- figure 2 shows a sectional view of a device for collecting solar energy by means of a concentrator of the nonimaging type according to the present invention, applied to a CPC concentrator.

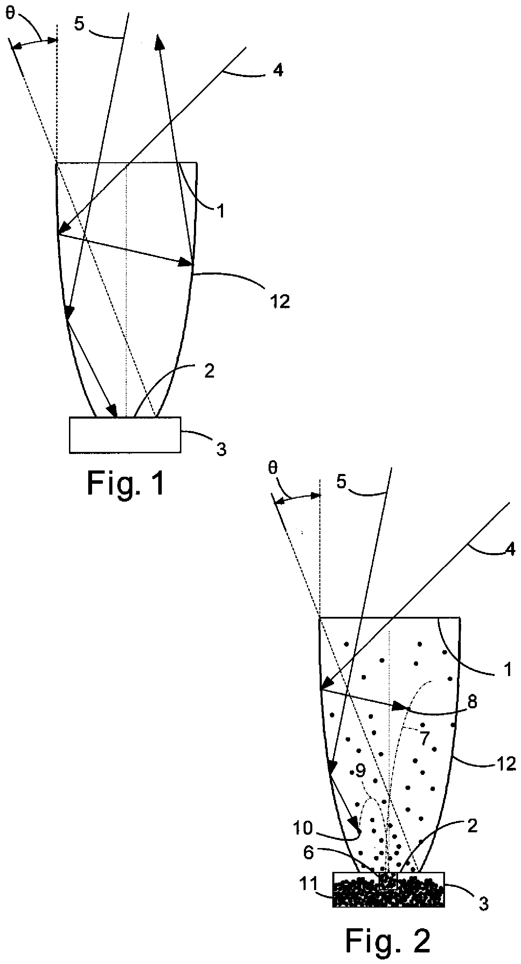

Making preliminarily reference to figure 1, in a solar concentration system CPC, indicated as a whole by the reference number 12, with an inlet area 1, an outlet area 2 and an acceptance angle θ, sun rays entering the inlet section with an angle lower than θ, such as for example the ray indicated by the reference number 5, reach the outlet section 2 and the receiver 3; on the contrary, the ray 4, which presents an angle of inlet greater than that of acceptance, after a number of reflections on the walls of the concentrator 12, is rejected and will never reach the outlet section 2 and, consequently, the receiver 3.

In figure 2, a device for collecting solar energy by means of a concentrator of the nonimaging type according to the present invention, applied to the CPC concentrator 12 already shown with reference to figure 1, without prejudice to the geometry of the CPC 12 and of the receiver 3, provides for an input devices 6 that randomly introduce within the CPC 12 some solid particles 11 taken from the inside of the receiver 3.

Solid particles 11 taken from the inside of the receiver 3 and introduced within the CPC 12 therefore occupy part of the empty space delimited by the CPC 12. For example, the solid particle 8, launched from the input device 6, following the trajectory 7, intercepts the ray 4, with inlet angle higher than the acceptance angle, absorbing all or part of the thermal energy and transporting it, falling back, towards the receiver 3. If it had not been intercepted by the solid particle 8, this energy would have been lost, as already explained with reference to figures 1, disclosing the operation of the CPCs according to the prior art.

In the same way, also the solid particle 10, launched from the input device 6, following the trajectory 9, intercepts the ray 5, with inlet angle lower than the acceptance angle, absorbing all or part of its thermal energy and transporting it, falling back, towards the receiver 3, but in a way completely different from what would happen in a CPC according to the prior art.

Other rays, with inlet angle lower than that of acceptance, reach the receiver 3 and give thermal energy to the solid particles that are located inside this receiver. Inside the receiver 3, to optimize the heat exchange, the solid particles may advantageously be kept in motion, for example by generation of a fluidised bed.

It appears evident that, in a device for collecting solar energy by means of a concentrator of the nonimaging type according to the present invention, the operation of a CPC concentrator 12 is deeply changed by the presence of the solid particles and that, as a consequence, it is possible a great improvement of the system performance, since such particles make it possible to absorb part of the energy that, in a CPC concentrator according to the prior art, would be surely lost.

It is also clear that the solid particles, during their ascent and descent trajectory within the CPC 12, meet a large number of rays and that the particles themselves, interacting between them, can change the trajectory imposed on them by the input device 6. Accordingly, the input device 6 is preferably selected from those capable of ensuring a more uniform possible movement of the particles 11 taken from the receiver 3.

Solid particles 11, according to the invention, will be preferably made of material with high solar absorption and low emissivity, but anyway they will be chosen according to the actual operating conditions of the system as requested by the receiver 3 for energy recovery.

The input of the particles may be carried out in different ways. A preferred embodiment provides for the use of a "spouted bed" that, itself acting as receiver, allows to use the "fountain of particles" that is created on top as a true ejector.

However, are also possible mechanical, fluidodynamic or combined systems designed so that the particles do not exit from the top of the CPC 12 or from another nonimaging system and occupy, as far as possible, all the available volume.

The input process can be continuous or discontinuous and therefore programmed to operate with a certain frequency.

By means of the device for collecting solar energy by means of a concentrator of the nonimaging type according to the present invention it is then created a multifocus system, able of differently the thermal energy transmitted and focused by a traditional NIO system or, in particular, by a CPC.

In conclusion, the invention can be summarised as a nonimaging system the internal volume of which is partially occupied by a series of solid particles, introduced from the outlet section of the NIO system, able to absorb the sun radiation entering the NIO system, indipendently from the acceptance angle.

The present invention has been described for illustrative but not limitative purposes, according to its preferred embodiments, but it is to be understood that variations and/or modifications may be made by those skilled in the art without departing from the relative scope of protection, as defined by the enclosed claims.

## Claims

1. Device for collecting solar energy by means of a concentrator (12) of the nonimaging type and a receiver (3) for the transfer of energy by heat exchange with a fluid which operates, independently, a thermodynamic cycle for the exploitation of energy, said concentrator (12) comprising an inlet area (1), an underlying outlet area (2) and an inner space between said inlet area (1) and said outlet area (2); said receiver (3) being positioned under said concentrator (12) and said inner space of the concentrator (12) and said receiver (3) being connected by said outlet area (2), **characterised in that** said inner space of the concentrator (12) and said receiver (3) are in fluid communication through said outlet area (2), a plurality of solid particles (11) are present inside said receiver (3), **characterized in that** said device for collecting solar energy further comprises means (6) apt to take a part of said solid particles (11) from said receiver (3) and to put them from below inside said inner space of said concentrator (12), said solid particles (11) subsequently returning, by gravity, into said receiver (3), passing through said outlet area (2).

2. Device for collecting solar energy according to claim 1, **characterised in that** said means (6) apt to take said solid particles (11) from said receiver (3) and to put them from below inside said inner space of said concentrator (12) comprise an input device.

3. Device for collecting solar energy according to claim 1 or 2, **characterised in that** said means (6) apt to take said solid particles (11) from said receiver (3) and to put them from below inside said inner space of said concentrator (12) are made of streams of gases, vapours, or by a combination of the same, apt to raise said solid particles (11) up to a height comprised between said inlet area (1) and said outlet area (2) of the concentrator (12).

4. Device for collecting solar energy according to claim 2, **characterised in that** said receiver (3) and said means (6) apt to take said solid particles (11) from said receiver (3) and put them inside said inner space of said concentrator (12) are made of a spouted bed.

5. Device for collecting solar energy according to any of the preceding claim, **characterised in that** said concentrator (12) is a CPC concentrator (Compound Parabolic Concentrator).

6. Device for collecting solar energy according to any of the preceding claim, **characterised in that** said solid particles (11) are made of a material with high solar absorption and low emissivity.

7. Device for collecting solar energy according to any of the preceding claim, **characterised in that** said solid particles (11) are made of oxides of the metallic type.

8. Device for collecting solar energy according to claim 7, **characterised in that** said solid particles (11) are made of chromite ((Mg,Fe)(Cr,Al)₂O₄).

## Patentansprüche

1. Vorrichtung zum Sammeln von Sonnenenergie mittels eines Konzentrators (12) vom nichtabbildenden Typ und eines Empfängers (3) für die Übertragung von Energie durch Wärmeaustausch mit einem Fluid, das unabhängig einen thermodynamischen Kreisprozess zur Nutzung von Energie betreibt, wobei der besagte Konzentrator (12) einen Einlassbereich (1), einen darunter liegenden Auslassbereich (2) und einen Innenraum zwischen dem besagten Einlassbereich (1) und dem besagten Auslassbereich (2) umfasst; wobei der besagte Empfänger (3) unter dem besagten Konzentrator (12) positioniert ist und der besagte Innenraum des Konzentrators (12) und der besagte Empfänger (3) durch den besagten Auslassbereich (2) verbunden sind, **dadurch gekennzeichnet, dass** der besagte Innenraum des Konzentrators (12) und der besagte Empfänger (3) in Fluidverbindung durch den besagten Auslassbereich (2) stehen, eine Vielzahl von festen Partikeln (11) innerhalb des besagten Empfängers (3) vorhanden sind, **dadurch gekennzeichnet, dass** die besagte Vorrichtung zum Sammeln von Sonnenenergie ferner Mittel (6) umfasst, die geeignet sind, einen Teil der festen Partikel (11) von dem besagten Empfänger (3) zu nehmen und sie von unten in den besagten Innenraum des besagten Konzentrators (12) zu bringen, wobei die besagten festen Partikel (11) anschließend durch Schwerkraft in den besagten Empfänger (3) zurückkehren, wobei sie durch den besagten Auslassbereich (2) hindurchgehen.

2. Vorrichtung zum Sammeln von Sonnenenergie nach Anspruch 1, **dadurch gekennzeichnet, dass** die besagten Mittel (6), die geeignet sind, die besagten festen Partikel (11) von dem besagten Empfänger (3) zu nehmen und sie von unten in den besagten Innenraum des besagten Konzentrators (12) zu bringen, eine Eingabevorrichtung umfassen.

3. Vorrichtung zum Sammeln von Sonnenenergie nach Anspruch 1 oder 2, **dadurch gekennzeichnet, dass** die besagten Mittel (6), die geeignet sind, die festen Partikel (11) von dem besagten Empfänger (3) zu nehmen und sie von unten in den besagten Innenraum des besagten Konzentrators (12) zu bringen, aus Gas-, Dampf- oder aus einer Kombination derselben gebildet sind, die geeignet sind, die besagten festen Partikel (11) auf eine Höhe anzuheben, die zwischen dem besagten Einlassbereich (1) und dem besagten Auslassbereich (2) des Konzentrators (12) liegt.

4. Vorrichtung zum Sammeln von Sonnenenergie nach Anspruch 2, **dadurch gekennzeichnet, dass** der besagte Empfänger (3) und die besagten Mittel (6), die geeignet sind, die besagten festen Partikel (11) von dem besagten Empfänger (3) zu nehmen und sie in den besagten Innenraum des besagten Konzentrators (12) zu bringen, aus einer Strahlschicht bestehen.

5. Vorrichtung zum Sammeln von Sonnenenergie nach irgendeinem der vorangegangenen Ansprüche, **dadurch gekennzeichnet, dass** der besagte Konzentrator (12) ein CPC-Konzentrator (Verbundparabolkonzentrator) ist.

6. Vorrichtung zum Sammeln von Sonnenenergie nach irgendeinem der vorangegangenen Ansprüche, **dadurch gekennzeichnet, dass** die besagten festen Partikel (11) aus einem Material mit hoher Solarabsorption und niedriger Emissivität bestehen.

7. Vorrichtung zum Sammeln von Sonnenenergie nach irgendeinem der vorangegangenen Ansprüche, **dadurch gekennzeichnet, dass** die besagten festen Partikel (11) aus Oxiden des metallischen Typs bestehen.

8. Vorrichtung zum Sammeln von Sonnenenergie nach Anspruch 7, **dadurch gekennzeichnet, dass** die besagten festen Partikel (11) aus Chromit ((Mg,Fe) (Cr,AI)_{2O4}) bestehen.

## Revendications

1. Dispositif pour collecter de l'énergie solaire au moyen d'un concentrateur (12) du type sans formation d'image et d'un récepteur (3) pour le transfert d'énergie par échange de chaleur avec un fluide qui fait fonctionner, indépendamment, un cycle thermodynamique pour l'exploitation d'énergie, ledit concentrateur (12) comprenant une zone d'entrée (1), une zone de sortie (2) sous-jacente et un espace intérieur entre ladite zone d'entrée (1) et ladite zone de sortie (2) ; ledit récepteur (3) étant positionné en dessous dudit concentrateur (12) et ledit espace intérieur du concentrateur (12) et ledit récepteur (3) étant raccordés par ladite zone de sortie (2), **caractérisé en ce que** ledit espace intérieur du concentrateur (12) et ledit récepteur (3) sont en communication fluidique à travers ladite zone de sortie (2), une pluralité de particules solides (11) sont présentes à l'intérieur dudit récepteur (3), **caractérisé en ce que** ledit dispositif pour collecter de l'énergie solaire comprend également des moyens (6) capables d'amener une partie desdites particules solides (11) dudit récepteur (3) et de les placer d'en dessous à l'intérieur dudit espace intérieur dudit concentrateur (12), lesdites particules solides (11) retournant ensuite, par gravité, dans ledit récepteur (3), traversant ladite zone de sortie (2).

2. Dispositif pour collecter de l'énergie solaire selon la revendication 1, **caractérisé en ce que** lesdits moyens (6) capables d'amener lesdites particules solides (11) depuis ledit récepteur (3) et de les placer d'en dessous à l'intérieur dudit espace intérieur dudit concentrateur (12) comprennent un dispositif d'entrée.

3. Dispositif pour collecter de l'énergie solaire selon la revendication 1 ou 2, **caractérisé en ce que** lesdits moyens (6) capables d'amener lesdites particules solides (11) depuis ledit récepteur (3) et de les placer d'en dessous à l'intérieur dudit espace intérieur dudit concentrateur (12) sont constitués de flux de gaz, vapeurs, ou d'une combinaison de ceux-ci, capables de soulever lesdites particules solides (11) à une hauteur comprise entre ladite zone d'entrée (1) et ladite zone de sortie (2) du concentrateur (12).

4. Dispositif pour collecter de l'énergie solaire selon la revendication 2, **caractérisé en ce que** ledit récepteur (3) et lesdits moyens (6) capables d'amener lesdites particules solides (11) depuis ledit récepteur (3) et de les placer à l'intérieur dudit espace intérieur dudit concentrateur (12) sont composés d'un lit fluidisé avec giclage.

5. Dispositif pour collecter de l'énergie solaire selon l'une quelconque des revendications précédentes, **caractérisé en ce que** ledit concentrateur (12) est un concentrateur CPC (Concentrateur parabolique composé).

6. Dispositif pour collecter de l'énergie solaire selon l'une quelconque des revendications précédentes, **caractérisé en ce que** lesdites particules solides (11) sont constituées d'une matière qui présente une absorption solaire élevée et une faible émissivité.

7. Dispositif pour collecter de l'énergie solaire selon l'une quelconque des revendications précédentes, **caractérisé en ce que** lesdites particules solides (11) sont constituées d'oxydes du type métallique.

8. Dispositif pour collecter de l'énergie solaire selon la revendication 7, **caractérisé en ce que** lesdites particules solides (11) sont constituées de chromite ((Mg,Fe)(Cr,AI)₂O₄).
